# FASCICULE DE BREVET EUROPEEN

(11) **EP 3 210 735 B1**
(45) Date de publication et mention de la délivrance du brevet: **07.11.2018**
(21) Numéro de dépôt: 17157198.7
(22) Date de dépôt: 21.02.2017
(51) Int. Cl.: B29C 33/44, B29C 45/40

(54) **DISPOSITIF D'ÉJECTION POUR MOULE COMPRENANT UNE CHAÎNE DE MAILLONS COULISSANTS**
VORRICHTUNG ZUM AUSWERFERN BESTEHEND AUS KETTENGLIEDERN
EJECTION DEVICE COMPRISING A CHAIN OF SLIDING LINKS

(30) Priorité: 26.02.2016 FR 1651639
(43) Date de publication de la demande: 30.08.2017
(73) Titulaire: Faurecia Intérieur Industrie, 92000 Nanterre (FR)
(72) Inventeur: BELLIARD, Sylvain, 72700 Rouillon (FR)
(74) Mandataire: Lavoix

(56) Documents cités:
- JP-A- H0 671 703
- JP-A- H06 328 533
- US-A- 3 290 724

## Description

La présente invention concerne un dispositif d'éjection du type pour moule de réalisation d'un article moulé dans une cavité de moulage destiné à permettre l'éjection de l'article moulé hors de ladite cavité de moulage, ledit dispositif comprenant :
- un dispositif de poussée mobile en translation selon un premier axe entre une position rétractée et une position d'éjection,
- au moins un élément d'éjection mobile en translation selon un deuxième axe, différent du premier axe, entre une position rétractée et une position d'éjection,
- au moins un dispositif de transfert reliant le dispositif de poussée et l'élément d'éjection, ledit dispositif de transfert étant agencé pour déplacer l'élément d'éjection selon le deuxième axe entre sa position rétractée et sa position d'éjection lorsque le dispositif de poussée est déplacé selon le premier axe entre sa position rétractée et sa position d'éjection.

Dans un moule de réalisation d'une pièce moulée, tel qu'un moule d'injection, la pièce moulée est retirée du moule, par exemple au moyen d'un outil de préhension, lorsque la cavité de moulage est ouverte. Afin de faciliter ce retrait, il est prévu de séparer la pièce moulée de la partie du moule sur laquelle la pièce moulée repose au moyen d'un dispositif d'éjection.

Un tel dispositif d'éjection comprend généralement une plaque d'éjection, mobile dans un espace évidé de la partie du moule selon une direction correspondant à la direction d'éjection de la pièce, et une ou plusieurs tiges d'éjection solidaires de la plaque d'éjection et débouchant dans la paroi de la partie du moule contre laquelle la pièce moulée est appliquée. En déplaçant la plaque d'éjection selon la direction d'éjection, les tiges d'éjection poussent la pièce moulée de sorte à la séparer de la paroi de la partie du moule, ce qui permet le retrait ultérieur de la pièce moulée. L'utilisation de plusieurs tiges est particulièrement intéressante lorsque la pièce moulée présente une surface importante car ces tiges peuvent être réparties sur cette surface afin de pousser la pièce en différentes parties de celle-ci et éviter des déformations et ou des ruptures de la pièce au cours de son éjection. L'utilisation d'une plaque d'éjection permet de déplacer simultanément toutes les tiges au moyen d'un seul dispositif d'actionnement de la plaque d'éjection

Cependant, dans un tel dispositif d'éjection, les tiges sont mobiles uniquement selon une direction d'éjection unique, ce qui limite les possibilités de courses d'éjection. Une telle limitation peut être problématique pour des pièces présentant des formes complexes, par exemple lorsque ces pièces ne sont pas planes et présentent des zones s'étendant dans un ou plusieurs plans différents d'un plan perpendiculaire à la direction d'éjection ou lorsqu'elles comprennent des éléments s'étendant en saillie selon une direction différente de la direction d'éjection.

En outre, pour des pièces présentant des formes complexes, telles qu'une partie en contredépouille, la simple éjection de la pièce hors du moule ne permet pas de démouler la partie en contredépouille. Pour démouler cette partie, il est connu d'utiliser un tiroir mobile dans la cavité de moulage entre une position de moulage, dans laquelle le tiroir définit avec la cavité de moulage la forme de la zone en contre dépouille, et une position rétractée, dans laquelle le tiroir est retiré de la zone en contre dépouille et permet l'éjection de la pièce hors de la cavité de moulage.

L'éjection d'une telle pièce nécessite donc une opération d'actionnement du tiroir et une opération d'éjection de la pièce, ce qui augmente le temps de cycle du moule et rend la structure du moule plus complexe.

Les documents JP-H06 328533, JP-H0671703 et US-3 290 724 décrivent des dispositifs d'éjection selon le préambule de la revendication 1.

L'un des buts de l'invention est de pallier ces inconvénients en proposant un dispositif d'éjection offrant une plus grande liberté d'agencement tout en étant moins encombrant et permettant en outre le retrait d'un tiroir d'une zone en contre-dépouille au cours de l'éjection de la pièce.

A cet effet, l'invention concerne un dispositif d'éjection du type précité, dans lequel le dispositif de transfert comprend au moins deux maillons, mobiles en translation l'un par rapport à l'autre et par rapport au dispositif de poussée et à l'élément d'éjection.

Le dispositif de transfert permet de modifier la direction d'éjection de l'élément d'éjection en choisissant un deuxième axe incliné par rapport au premier axe. Ainsi, à titre d'exemple, le dispositif d'éjection peut comprendre une tige d'éjection éjectant la pièce selon le premier axe et une autre tige d'éjection formant l'élément d'éjection et éjectant la pièce selon le deuxième axe, ce qui permet d'éjecter des pièces de forme complexe. En outre, en prévoyant une surface de moulage à l'extrémité de l'élément d'éjection, par exemple pour former une partie en contre dépouille sur l'article moulé, cette surface de moulage peut être désengagée de la partie en contre dépouille au cours du mouvement de la deuxième tige entre sa position rétractée et sa position d'éjection. Ainsi, l'actionnement du dispositif d'éjection permet en outre de démouler une partie de l'article moulé.

Selon d'autres caractéristiques du dispositif d'éjection selon l'invention :
- le dispositif de transfert comprend un élément de guidage recevant lesdits maillons, lesdits maillons étant déplacés selon une course de déplacement dans ledit élément de guidage par le dispositif de poussée et déplaçant l'élément d'éjection, lesdits maillons étant guidés dans ledit élément de guidage sur toute la course de déplacement ;
- l'élément de guidage comprend au moins deux parois opposées s'étendant chacune selon la course de déplacement ;
- les maillons comprennent chacun deux surfaces de guidage opposées, lesdites surfaces de guidage étant respectivement en contact permanent avec une paroi opposée de l'élément de guidage sur toute la course de déplacement de sorte que les maillons sont guidés dans ledit élément de guidage sur toute la course de déplacement ;
- les maillons sont identiques les uns aux autres ;
- le deuxième axe forme un angle non nul avec le premier axe ;
- chaque maillon comprend une première surface de glissement formant une surface de translation avec un premier maillon adjacent et une deuxième surface de glissement formant une surface de translation avec un deuxième maillon adjacent ;
- chaque surface de glissement forme un angle par rapport à une direction perpendiculaire au premier axe, ledit angle étant négatif pour retarder le déplacement de l'élément d'éjection par rapport au dispositif de poussée ou positif pour accélérer le déplacement de l'élément d'éjection par rapport au dispositif de poussée ou nul pour déplacer l'élément d'éjection et le dispositif de poussée à la même vitesse ;
- l'élément d'éjection comprend une surface de moulage secondaire agencée pour former une partie de la cavité de moulage et pour mouler une partie de l'article moulé, le déplacement de l'élément d'éjection dans la position d'éjection entraînant la séparation de la surface de moulage secondaire de la partie de l'article moulé moulée par ladite surface de moulage secondaire ; et
- le dispositif de poussée comprend une plaque d'éjection mobile en translation selon une direction parallèle au premier axe, ledit dispositif d'éjection comprenant en outre une tige d'éjection solidaire de la plaque d'éjection et agencée pour déplacer l'article moulé selon ladite direction parallèle au premier axe.

L'invention concerne également un moule comprenant une première partie de moule et une deuxième partie de moule mobiles l'une par rapport à l'autre entre une position ouverte, dans laquelle la deuxième partie de moule est écartée de la première partie de moule, et une position fermée, dans laquelle la première et la deuxième parties de moule définissent entre elles une cavité de moulage présentant la forme de la pièce à mouler, ledit moule comprenant un dispositif d'éjection tel que décrit ci-dessus intégré dans la première partie de moule, l'élément d'éjection formant une partie de la cavité de moulage en position rétractée et s'étendant en saillie de la première partie de moule selon le deuxième axe en position d'éjection.

D'autres aspects et avantages de l'invention apparaîtront à la lecture de la description qui suit, donnée à titre d'exemple et faite en référence aux dessins annexés, dans lesquels :
- Fig. 1 est une représentation schématique en perspective d'une première partie de moule comprenant un dispositif d'éjection selon un mode de réalisation de l'invention, ledit dispositif étant en position rétractée,
- la Fig. 2 est une représentation schématique en coupe de la première partie de moule de la Fig. 1,
- la Fig. 3 est une représentation schématique en coupe de la première partie de moule de la Fig. 2, le dispositif d'éjection étant dans une position intermédiaire entre la position rétractée et la position d'éjection,
- la Fig. 4 est une représentation schématique en coupe de la première partie de moule de la Fig. 2, le dispositif d'éjection étant en position d'éjection,
- La Fig. 5 est une représentation schématique en perspective et éclatée du dispositif d'éjection selon un mode de réalisation de l'invention,
- la Fig. 6 est une représentation schématique d'une partie du dispositif d'éjection de la Fig. 5, et
- les Fig. 7 et 9 sont des représentations schématiques en perspective de maillons selon différents modes de réalisation du dispositif d'éjection selon l'invention,
- les Fig. 8 et 10 sont des représentations schématiques en perspective de l'assemblage des maillons représentés respectivement sur les Fig. 7 et 9, et
- les Fig. 11 à 15 sont des représentations schématiques en coupe de la première partie de moule, le dispositif d'éjection étant en position rétractée, et montrant différentes courses de déplacement du dispositif d'éjection, et

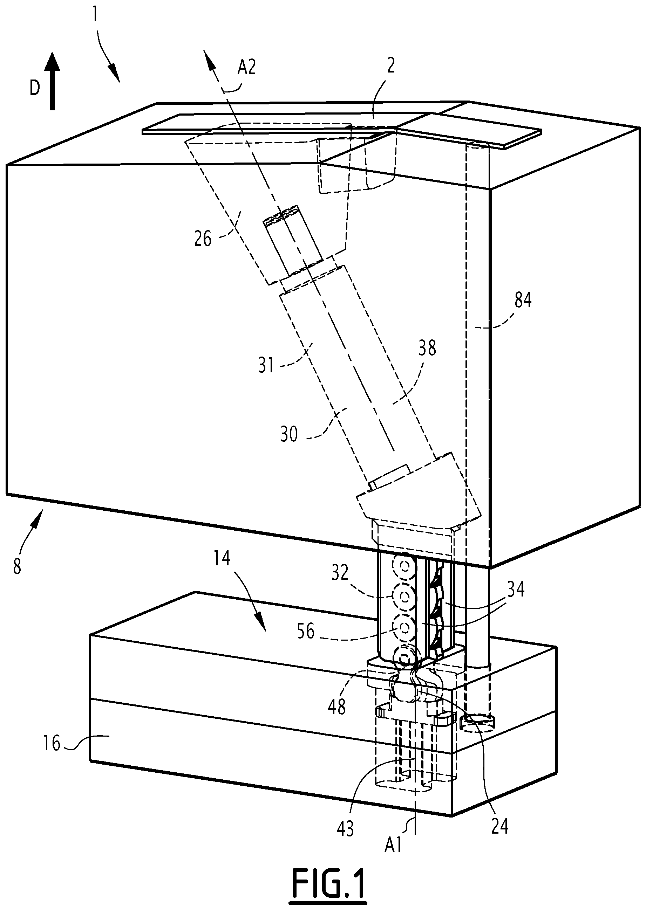

En référence à la Fig. 1, on décrit un moule de réalisation 1 d'un article moulé 2 pouvant présenter toute forme apte à être moulée. Un tel moule de réalisation 1 est par exemple un moule d'injection, un moule de compression, un moule de moussage ou autre. Plus généralement, un moule permet de conférer une forme voulue à un matériau disposé dans une cavité de moulage présentant la forme voulue.

L'article moulé 2 est par exemple une pièce de véhicule automobile ou autre. Plus particulièrement, selon le mode de réalisation représenté sur les figures, l'article moulé 2 comprend une surface principale 4 et une partie en contre-dépouille 6 par rapport à la surface principale 4, c'est-à-dire une partie comprenant au moins une surface non démoulable par simple écartement de deux parties de moule et nécessitant un élément de moulage complémentaire et déplaçable dans une direction différente de la direction d'écartement des deux parties de moule.

Le moule de réalisation 1 comprend une première partie 8 et une deuxième partie (non représentée pour simplifier les figures), mobiles l'une par rapport à l'autre entre une position ouverte, dans laquelle les première et deuxième parties sont écartées l'une de l'autre, et une position fermée, dans laquelle les première et deuxième parties sont rapprochées l'une de l'autre de sorte à définir une cavité de moulage principale fermée. La cavité de moulage principale présente une forme complémentaire de la surface principale 4 de l'article moulé à réaliser. Le déplacement de la position fermée à la position ouverte se fait selon une direction d'ouverture D, représentée sur les figures. La première partie 8 comprend une surface de moulage 10 définissant, avec une surface de moulage de la deuxième partie, la cavité de moulage principale lorsque les première et deuxième parties sont en position fermée.

La surface principale 4 est telle qu'elle peut être séparée de la surface de moulage 10 par un déplacement de l'article moulé 2 selon une unique direction d'éjection, par exemple parallèle à la direction d'ouverture D. Par conséquent, la surface principale 4 n'est pas nécessairement plane et peut présenter toute forme permettant un démoulage par déplacement de l'article moulé 2 selon la direction d'éjection. Ainsi, selon le mode de réalisation représentée sur les figures, la surface principale 4 comprend une première partie 5 sensiblement perpendiculaire à la direction d'ouverture D et une deuxième partie 7 inclinée par rapport à la première partie 5. Il convient de noter que la cavité de moulage principale pourrait également être agencée pour former des éléments s'étendant en saillie de la surface principale 4, par exemple des nervures, tant que ces éléments peuvent également être séparés de la cavité de moulage principale par un déplacement de l'article moulé 2 selon la direction d'éjection.

Selon le mode de réalisation représenté sur les figures, la cavité de moulage principale est en communication fluidique avec une cavité de moulage secondaire définie par la surface de moulage 10 de la première partie et une surface de moulage complémentaire 12 portée par le dispositif d'éjection de l'invention, comme cela sera décrit ultérieurement. La cavité de moulage complémentaire présente une forme complémentaire de la partie en contre-dépouille 6 de l'articlé moulé. La cavité de moulage principale et la cavité de moulage complémentaire forment ensemble la cavité de moulage du moule de réalisation 1.

Le moule de réalisation 1 est par exemple un moule d'injection agencé pour injecter une matière plastique à une pression prédéterminée dans la cavité de moulage. A cet effet, le moule de réalisation 1 comprend tous les moyens permettant de réaliser et de contrôler cette injection et la formation de la pièce, tels que une ou plusieurs buses d'injection du matériau plastique, des moyens de régulation de la température de la cavité de moulage, des moyens d'actionnement et de déplacement des première et deuxième parties du moule de réalisation 1, etc. De tels moyens étant connus, ils ne seront pas décrits plus en détail ici.

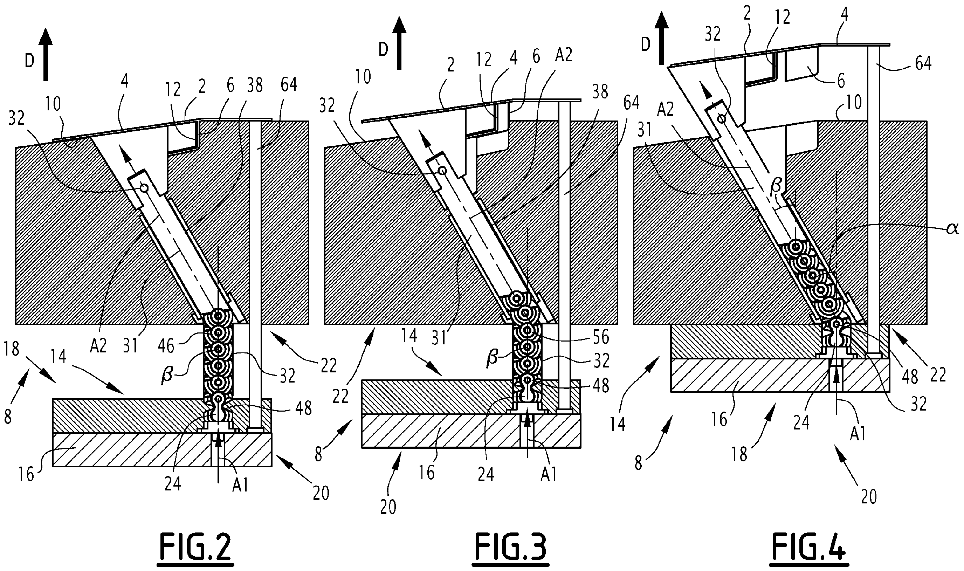

Le moule de réalisation 1 comprend un dispositif d'éjection agencé pour faciliter le retrait de l'article moulé 2 du moule de réalisation 1 après sa réalisation. Une fois que l'article moulé 2 est réalisé, la première et la deuxième parties du moule sont déplacées dans la position ouverte. L'article moulé 2 se trouve alors contre la surface de moulage 10 de la première partie 8, comme représenté sur les Fig. 1 et 2, et le dispositif d'éjection est agencé pour écarter l'article moulé 2 de la surface de moulage 10, comme représenté sur la Fig. 4, afin de permettre la préhension de l'article moulé 2 pour le sortir du moule 1 de réalisation. Il convient de noter que le dispositif d'éjection peut être actionné au cours de l'ouverture du moule 1 de sorte que l'éjection de l'article moulé 2 ne débute pas nécessairement alors que le moule 1 est déjà en position ouverte.

Le dispositif d'éjection comprend un dispositif de poussée 14 mobile dans la première partie 8 selon un premier axe A1 entre une position rétractée, représentée sur les Figs. 1 et 2, et une position d'éjection, représentée sur la Fig. 4. Le premier axe A1 s'étend selon la direction d'éjection et est par exemple sensiblement parallèle à la direction d'ouverture D de sorte que, en position d'éjection, l'article moulé 2 est écarté de la surface de moulage 10 dans l'espace entre la première partie 4 et la deuxième partie du moule.

Le dispositif de poussée 14 comprend au moins une plaque d'éjection 16 disposée, de façon mobile en translation selon le premier axe A1, dans un espace 18 de la première partie 8. Dans la position rétractée, la plaque d'éjection 16 est disposée dans une partie amont 20 de l'espace 18, c'est-à-dire la partie de l'espace 18 la plus éloignée de la surface de moulage 10, et dans la position d'éjection, la plaque d'éjection 16 est disposée dans une partie aval 22 de l'espace 18, c'est-à-dire la partie de l'espace 18 la plus rapprochée de la surface de moulage 10.

Le dispositif de poussée 14 comprend en outre un élément d'actionnement 24 solidaire en déplacement de la plaque d'éjection 16. L'élément d'actionnement 24 est relié à un dispositif de transfert 26 lui-même relié à un élément d'éjection 28.

L'élément d'éjection 28 est mobile selon un deuxième axe A2, différent du premier axe A1. Selon le mode de réalisation représenté sur les figures, l'élément d'éjection 28 est un bloc mobile portant la surface de moulage complémentaire 12. Ainsi, en position rétractée, le bloc est disposé dans la première partie de sorte que la surface de moulage complémentaire 12 s'étende en regard de la surface de moulage 10 de la première partie et définisse avec celle-ci la cavité de moulage complémentaire. L'élément d'éjection 28 comprend en outre une extrémité d'actionnement 30. L'élément d'éjection 28 comprend en outre une tige d'actionnement 31 reliée, par son extrémité avale, à l'extrémité d'actionnement 30 du bloc mobile et s'étendant selon le deuxième axe A2. L'extrémité amont de la tige d'actionnement 31 est reliée quant à elle au dispositif de transfert 26, comme cela sera décrit ultérieurement. Il convient de noter que la tige d'actionnement 31 pourrait être réalisée d'une seule pièce avec le bloc mobile. Cependant, prévoir un bloc mobile et une tige d'actionnement 31 formés de deux pièces séparées permet d'améliorer l'adaptabilité de l'élément d'éjection 28 à différents moules, comme cela sera décrit ultérieurement.

Le deuxième axe A2 forme un angle α avec le premier axe A1. La valeur de l'angle α est choisie en fonction de la forme de l'article moulé. Plus particulièrement, dans le cas où l'article moulé comprend une zone en contre-dépouille 6, l'angle α dépend de la distance nécessaire pour sortir le bloc mobile de la zone en contre-dépouille 6 au cours de l'éjection de l'article moulé 2, comme cela sera décrit ultérieurement.

Ainsi, l'élément d'éjection 28 est déplaçable entre une position rétractée et une position d'éjection respectivement lorsque le dispositif de poussée 14 est en position rétractée et en position d'éjection par l'intermédiaire du dispositif de transfert 26 qui est agencé pour transformer le mouvement du dispositif de poussée 14 selon le premier axe A1 en mouvement de l'élément d'éjection 28 selon le deuxième axe A2, comme cela va à présent être décrit.

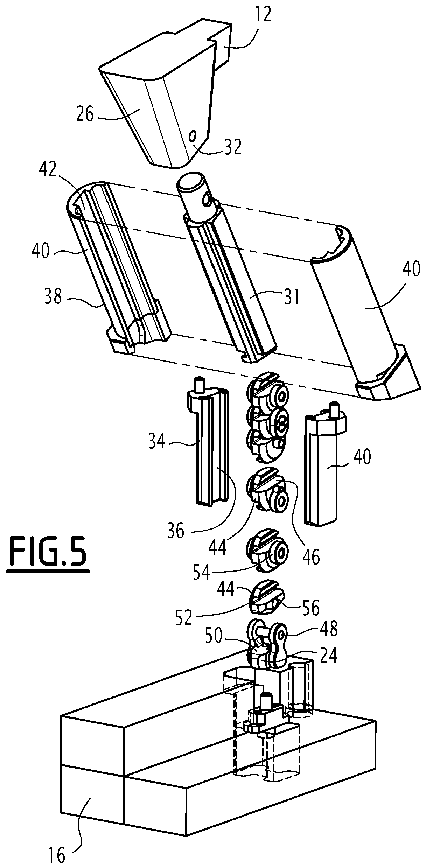

Le dispositif de transfert 26 comprend un élément de guidage 33 s'étendant dans la première partie 4 du moule de l'espace 18 à la surface de moulage 10 selon un trajet s'étendant selon le premier axe A1 dans l'espace 18 et selon le deuxième axe A2 dans la partie de la première partie 4 de moule s'étendant entre l'espace 18 et la surface de moulage 10. L'élément de guidage 33 comprend un premier tronçon 32, par exemple formé par deux premiers profilés 34, s'étendant dans l'espace 14 selon le premier axe A1 et définissant, par exemple entre les deux premiers profilés 34, une première gorge, ou glissière, de guidage 36, comme représenté sur la Fig. 5. L'élément de guidage 33 comprend également un deuxième tronçon 38, par exemple formé par deux deuxièmes profilés 40, s'étendant dans la première partie 4 entre l'espace 18 et la surface de moulage 10 selon le deuxième axe A2 et définissant, par exemple entre les deux deuxièmes profilés 40, une deuxième gorge, ou glissière, de guidage 42, comme représenté sur la Fig. 5. Les gorges de guidage 36, 42 sont définies par au moins deux parois opposées des profilés 34, 40. Ces parois opposées s'étendent selon le premier axe A1 pour le premier tronçon 32 et selon le deuxième A2 pour le deuxième tronçon 38, c'est-à-dire que les parois opposées s'étendent selon la course de déplacement des maillons 44, comme cela sera décrit ultérieurement. L'élément de guidage 33 est fixe par rapport à la première partie 4 de moule.

Il convient de noter que la plaque d'éjection 16 est mobile en translation par rapport au premier tronçon 32. A cet effet, la plaque d'éjection 16 comprend une empreinte 43 agencée pour recevoir les deux premiers profilés 34 du premier tronçon 32. Cette empreinte 43 est apte à coulisser autour du premier tronçon 32, ce qui permet de déplacer la plaque d'éjection 16 entre sa position rétractée et sa position d'éjection, comme cela sera décrit ultérieurement.

Le dispositif de transfert comprend en outre au moins deux maillons 44 reliés entre eux et dont l'un est relié au dispositif de poussée 14 et dont l'autre est relié à l'élément d'éjection 28. Les maillons 44 sont mobiles en translation l'un par rapport à l'autre et par rapport au dispositif de poussée 14 et à l'élément d'éjection 28. La translation des maillons 44 entre eux se fait selon des surfaces de glissement 46 et par rapport au dispositif de poussée 14 et à l'élément d'éjection 28, les surfaces de glissement 46 étant sensiblement parallèles les uns par rapport aux autres. Ainsi, chaque maillon 44 comprend une première surface de glissement 46 formant une surface de translation avec un premier maillon 44 adjacent et une deuxième surface de glissement 46 formant une surface de translation avec un deuxième maillon adjacent 44. La longueur des surfaces de glissement 46 est telle que les maillons 44 ne se désengagent pas les uns des autres lors du déplacement du dispositif d'éjection entre sa position rétractée et sa position d'éjection. En outre, ces surfaces de glissement 46 sont suffisantes pour pouvoir transmettre les efforts de poussée de la plaque d'éjection 16 à l'élément d'éjection 28.

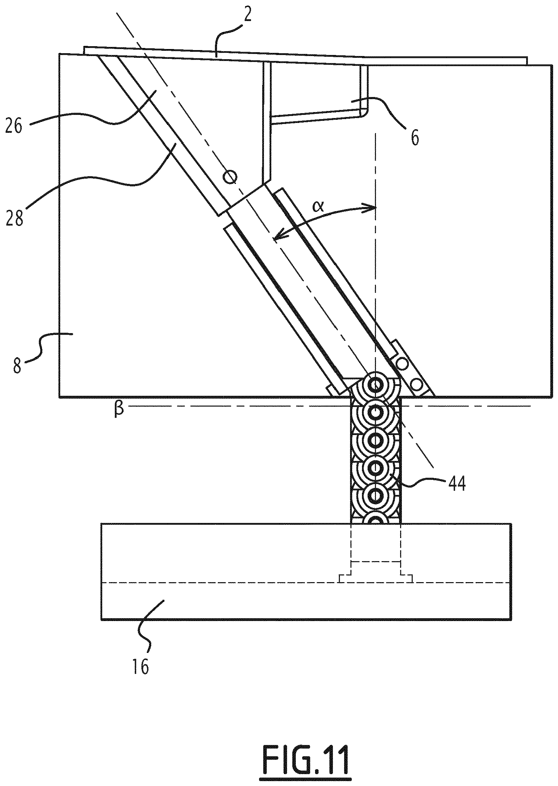

Chaque surface de guidage 46 forme un angle β avec une direction perpendiculaire au premier axe A1, comme représenté sur les Fig. 11 à 15 Le réglage de l'angle β par rapport au premier axe A1 permet de régler l'avance ou le retard de déplacement de l'élément d'éjection 28 par rapport au déplacement du dispositif de poussée 14, comme cela sera décrit ultérieurement.

Le nombre de maillons 44 du dispositif de transfert 26 dépend du trajet suivi par les maillons 44 dans l'élément de guidage 30 et est agencé pour que les maillons 44 relient le dispositif de poussée 14 à l'élément d'éjection 28. Plus particulièrement, les maillons 44 relient un maillon d'actionnement 48 solidaire de la plaque d'éjection 16 à l'extrémité amont de la tige d'actionnement 31.

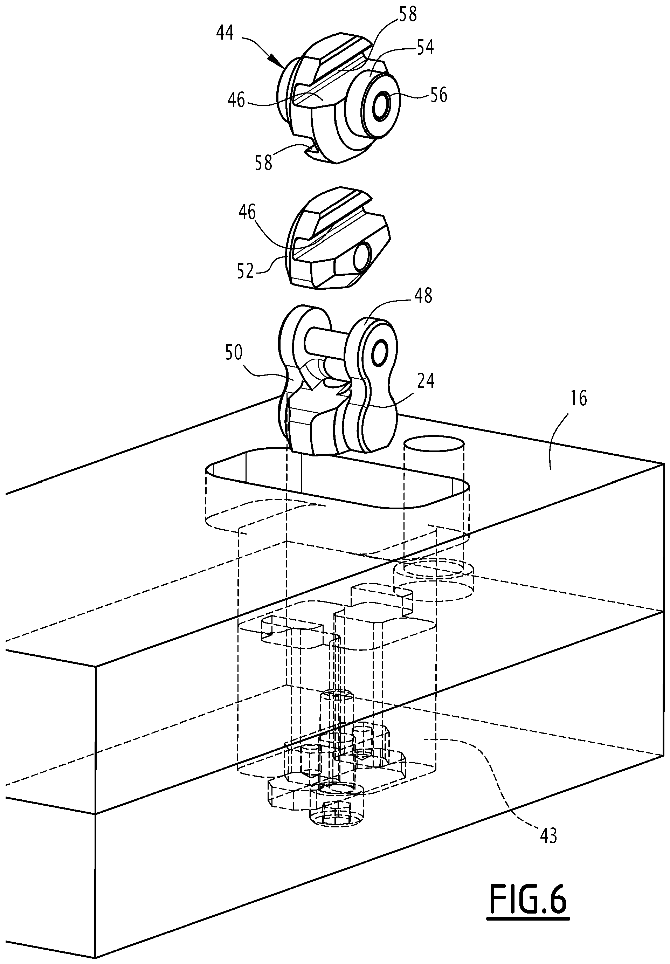

Le maillon d'actionnement 48 est formé d'un premier et d'un deuxième sous-maillons 50 et 52. Le premier sous-maillon 50 est solidaire en translation de la plaque d'éjection 16 et est mobile en translation selon le premier axe A1. Le deuxième sous-maillon 52 est articulé au premier sous-maillon 50 et comprend une surface de guidage 46 destinée à être reliée à un maillon 44 du dispositif de transfert 26, comme représenté sur les Fig. 5 et 6. Le deuxième sous-maillon 52 est ainsi mobile en rotation par rapport au premier sous-maillon 50 autour d'un axe sensiblement perpendiculaire au plan contenant le premier axe A1 et le deuxième axe A2.

Le dispositif de transfert 26 peut comprendre plus de deux maillons 44, dont deux maillons d'extrémités reliés respectivement au maillon d'actionnement 48 solidaire de la plaque d'éjection 16 et à l'extrémité amont de la tige d'actionnement 31, et au moins un maillon intermédiaire relié aux deux maillons d'extrémité ou plusieurs maillons intermédiaires reliés successivement les uns aux autres de sorte à former une chaîne de maillons 44 s'étendant dans l'élément de guidage 30 entre le maillon d'actionnement 48 et la tige d'actionnement 31.

Tous les maillons 44 sont identiques, c'est-à-dire qu'ils présentent une forme et une structure identiques, qu'ils soient des maillons d'extrémité ou des maillons intermédiaires.

Plusieurs formes de maillon 44 peuvent être envisagées, comme cela sera décrit ultérieurement. Cependant, ces formes sont adaptées pour coopérer entre elles et avec l'élément de guidage 30 sur toute la course de déplacement des maillons 44 de sorte que les maillons 44 soient guidés dans l'élément de guidage 30 sur toute la course de déplacement.

A cet effet, chaque maillon 44 comprend au moins une surface de guidage 54 agencée pour coopérer avec la première gorge de guidage 36 et avec la deuxième gorge de guidage 42 sur toute la course de déplacement des maillons. Par « coopérer », on entend que la surface de guidage 54 est en contact coulissant, glissant et/ou roulant avec l'une des gorges de guidage 36 et 42 sur toute la course de déplacement du maillon 44 portant cette surface de guidage 54. Ainsi, lorsque le maillon 44 se trouve dans le premier tronçon 32 de l'élément de guidage, la surface de guidage 54 est en contact avec au moins une surface de la première gorge de guidage 36 et lorsque le maillon 44 se trouve dans le deuxième tronçon 38, la surface de guidage 54 est en contact avec au moins une surface de la deuxième gorge de guidage 42. Selon le mode de réalisation représenté sur les Figs. 1 à 6, la surface de guidage 54 est formée par un galet 56 présentant un diamètre sensiblement égal à la largeur des gorges de guidage 36 et 42. La surface périphérique de forme cylindrique du galet 56 forme la surface de guidage en étant en contact glissant avec les parois de l'une des gorges de guidage 36, 42 en au moins deux points de la surface. Selon le mode de réalisation représenté sur les figures, chaque maillon 44 comprend deux galets 56 agencés pour coopérer respectivement avec l'un des profilés 34, 40, formant le premier tronçon 32 et le deuxième tronçon 38. Selon un mode de réalisation, les galets 56 sont en outre mobiles en rotation par rapport aux maillons 44, de sorte que la surface de guidage 54 peut également rouler sur les parois des gorges de guidage 36 et 42. Ainsi, le guidage des maillons 44 dans l'élément de guidage 30 est assuré de façon efficace, ce qui évite tout risque de blocage ou d'enrayage du dispositif d'éjection par blocage d'un maillon 44 dans l'élément de guidage 30. Il convient de noter que la surface de guidage 54 pourrait être définie directement par la forme du maillon 44 sans nécessiter l'ajout d'un galet, cette forme pouvant être agencée pour définir un contact glissant avec l'élément de guidage 30. Selon un mode de réalisation, chaque maillon 44 comprend deux surfaces de guidage 54 opposées agencées pour être en contact permanent avec les parois opposées définissant les gorges de guidage 36, 42 de l'élément de guidage 30.

Pour assurer le déplacement en translation des maillons 44 les uns par rapport aux autres, par rapport au maillon d'actionnement 48 solidaire de la plaque d'éjection 16 et par rapport à l'extrémité amont de la tige d'actionnement 31, chaque maillon 44 comprend deux surfaces de glissement 46, formées chacune par une paroi du maillon 44. Les parois formant les surfaces de glissement 46 peuvent être agencées de différentes façons, comme cela va être décrit à titre d'exemple, tant qu'elles sont complémentaires et permettent un déplacement en translation des unes par rapport aux autres. Selon le mode de réalisation représenté sur les Fig. 1 à 6, chaque maillon 44 présente, dans un plan contenant le premier axe A1 et le deuxième axe A2, une section en forme de S, comme plus particulièrement visible sur la Fig. 6. Ainsi, chaque maillon 44 comprend deux branches externes et une branche interne reliées entre elles de sorte à définir deux rainures 58, s'étendant chacune entre la branche interne et une des branches externes et s'ouvrant selon deux directions opposées. Les parois opposées des branches externes et de la branche interne définissent chacune une surface de glissement 46. Ainsi, comme représenté sur la Fig. 6, chaque maillon 44 comprend six surfaces de glissement 46a, 46b, 46c, 46d, 46e et 46f définies par les parois en regard de chaque rainure 58 et par les surfaces externes des branches externes du maillon 44. Un tel mode de réalisation permet d'assurer une liaison robuste entre les maillons 44, puisque chaque maillon 44 est maintenu dans deux rainures 58 de maillons 44 adjacents. Dans ce cas, le sous-maillon 52 du maillon d'actionnement 48 et l'extrémité amont de la tige d'actionnement 31 comprennent chacun une rainure complémentaire permettant de recevoir la surface de glissement 46 des maillons d'extrémité.

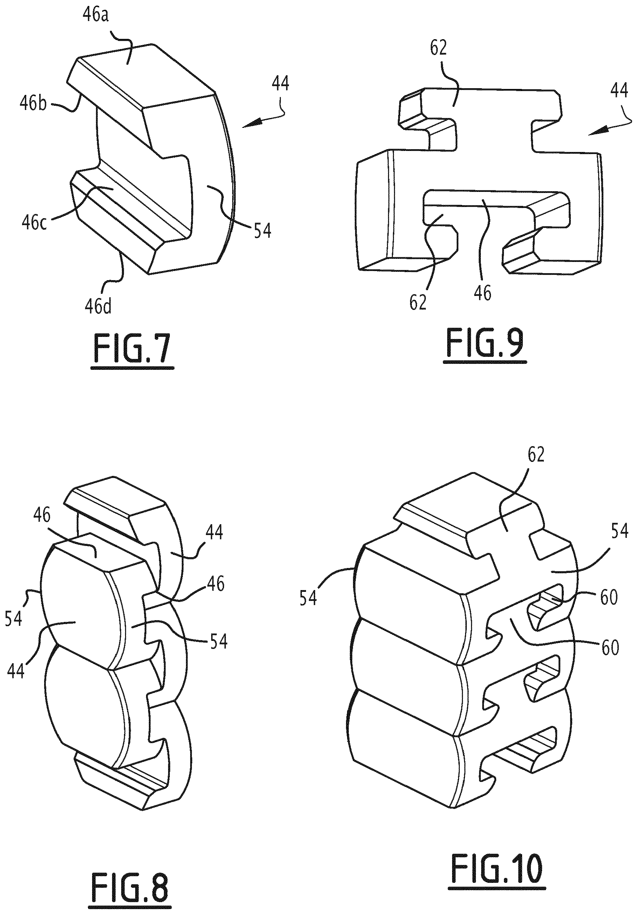

Selon le mode de réalisation représenté sur les Fig. 7 et 8, chaque maillon 44 présente, dans un plan contenant le premier axe A1 et le deuxième axe A2, une section en forme de C. Les surfaces de glissement 46 sont formées les parois opposées de chaque branche du C. Dans ce cas, comme représenté sur la Fig. 7, chaque maillon 44 comprend quatre surfaces de glissement 46a, 46b, 46c et 4d définies par les parois en regard des deux branches du C et par les parois externes de ces branches. Ainsi, chaque maillon 44 est en contact avec deux maillons 44 adjacents, chaque branche du C définissant deux surfaces de glissement 46, l'une étant en contact avec un maillon 44 et l'autre étant en contact avec un autre maillon 44, comme représenté sur la Fig. 8. Selon ce mode de réalisation, chaque maillon 44 comprend deux surfaces de guidage 54, par exemple formées par le flanc reliant les deux branches du C.

Selon le mode de réalisation représenté sur les Fig. 9 et 10, chaque maillon 44 comprend une rainure 60 et un ergot 62, l'ergot 62 étant de forme complémentaire de celle de la rainure 60. Les surfaces de glissement 46 sont définies par les surfaces intérieures de la rainure 60 et par les surfaces extérieures de l'ergot 62. Ainsi, comme représenté sur la Fig. 9, chaque maillon 44 comprend six surfaces de glissement 46. La rainure 60 d'un maillon 44 est ainsi agencée pour recevoir l'ergot 62 d'un maillon adjacent, comme représenté sur la Fig. 10. Un tel mode de réalisation assure une liaison robuste entre les maillons 44 et un guidage dans le coulissement des maillons 44 les uns par rapport aux autres. Dans ce mode de réalisation, les surfaces de guidage 54 de chaque maillon 44 sont par exemple formées par les parois externes de la rainure 60. Selon un mode de réalisation non représenté, chaque maillon 44 comprend une rainure et un ergot similaires à ceux représentés sur les Fig. 9 et 10. Dans ce mode de réalisation, les surfaces de guidage 54 de chaque maillon 44 sont de forme sphérique. Dans ce mode de réalisation, l'élément de guidage 30 est alors de forme tubulaire creux. Ainsi les deux premiers profilés 34, et les deux deuxièmes profilés 40 sont avantageusement remplacés chacun par un tube creux dans lequel les maillons 44 se déplacent.

Il convient de noter que sur les figures, les surfaces de glissement 46 ont été représentées comme étant sensiblement planes. Il est cependant entendu que ces surfaces de glissement 46 pourraient également être courbes. Dans ce cas, l'angle β est formé entre une tangente à une surface de glissement et une direction perpendiculaire au premier axe A1.

Il convient de noter que, pour chaque forme décrite ci-dessus, le sous-maillon 52 du maillon d'actionnement 48 et l'extrémité amont de la tige d'actionnement 31 comporte chacun une surface de glissement 46 de forme adaptée pour assurer un contact coulissant avec les surfaces de glissement 46 des maillons 44 décrits ci-dessus. Un tel mode de réalisation présente l'avantage d'être peu encombrant, notamment selon une direction perpendiculaire aux premier et deuxième axes A1 et A2.

Le glissement entre les surfaces de glissement 46 et entre les maillons 44 et l'élément de guidage 30 peut être favorisé par les matériaux utilisés pour réaliser les surfaces de glissement 46, les surfaces de guidage 54 et/ou les gorges de guidage 36 et 42 ou par un revêtement de ces surfaces et/ou parois ou par l'utilisation d'un lubrifiant.

Le dispositif d'éjection peut comprendre en outre une ou plusieurs tiges d'éjection 64 s'étendant selon des directions parallèles au premier axe A1. L'une des extrémités de la tige d'éjection 64 est solidaire de la plaque d'éjection 16 et son autre extrémité affleure la surface de moulage 10 dans la position rétractée du dispositif d'éjection et forme une partie de la surface de moulage 10, comme représenté sur les Fig. 1 et 2. La ou les tiges d'éjection 64 sont agencées pour permettre l'éjection de l'article moulé 2 selon la direction d'ouverture du moule, comme cela va être décrit à présent.

Le fonctionnement du dispositif d'éjection décrit ci-dessus va à présent être décrit.

Au cours du moulage de l'article, le moule 1 est en position fermée et le dispositif d'éjection est en position rétractée, dans laquelle la plaque d'éjection 16 se trouve dans la partie amont 20 de l'espace 18, la tige d'éjection 64 affleure la surface de moulage 10 et dans laquelle, selon le mode de réalisation représenté sur les figures, le élément d'éjection 28 définit avec la première partie 4 la cavité de moulage secondaire par sa surface de moulage secondaire 12.

Une fois que l'article a été réalisé, le moule 1 est ouvert en écartant les première et deuxième parties de moule l'une de l'autre selon la direction d'ouverture D. Au cours de cette ouverture ou après celle-ci, le dispositif d'éjection est actionné pour passer de sa position rétractée à sa position d'éjection.

Pour ce faire, la plaque d'éjection 16 est actionnée pour se déplacer dans l'espace 18 vers la partie aval 22 de cet espace 18, comme représenté sur la Fig. 3. Au cours de ce déplacement, la plaque déjection 16 se déplace selon le premier axe A1 en coulissant autour du premier tronçon 32 de l'élément de guidage 30, ce premier tronçon 32 pénétrant dans l'empreinte 43 de la plaque d'éjection 16 prévue à cet effet.

Le déplacement de la plaque d'éjection 16 entraîne le déplacement de la tige d'éjection 64 selon une direction parallèle au premier axe, ce qui écarte l'article moulé 2 de la surface de moulage 10 selon cette direction, comme représenté sur la Fig. 3.

En outre, le déplacement de la plaque d'éjection 16 entraîne le déplacement du maillon d'actionnement 48 selon le premier axe A1 qui lui-même entraîne le déplacement des maillons 44 dans l'élément de guidage 30, les maillons 44 entraînant le déplacement de l'élément d'éjection 28.

Comme représenté sur la Fig. 1, en position rétractée, les maillons 44 se trouvent initialement dans le premier tronçon 32 de l'élément de guidage 30. Le déplacement de la plaque d'éjection 16 entraîne un déplacement selon le premier axe A1 des maillons 44 qui s'engagent progressivement dans le deuxième tronçon 38 et changent de direction pour se déplacer selon le deuxième axe A2, comme représenté sur la Fig. 3. Ce changement de direction est possible par le glissement des surfaces de glissement 46 des maillons 44 les unes par rapport aux autres.

Le déplacement des maillons 44 selon le deuxième axe A2 entraîne un déplacement selon cet axe de la tige d'actionnement 31 et du bloc mobile. Du fait de l'angle α entre le premier axe A1 et le deuxième axe A2, le déplacement du bloc mobile entraîne un glissement du bloc mobile hors de la zone en contre-dépouille 6, comme représenté sur la Fig. 3, ce qui permet de démouler cette zone. Il convient de noter qu'en adaptant la valeur de l'angle β, il est possible de retarder ou d'accélérer le déplacement du bloc mobile hors de la zone en contre-dépouille 6 par rapport au déplacement du dispositif de poussée 14. C'est-à-dire que, pour un déplacement à une vitesse donnée du dispositif de poussée 14 selon le premier axe A1, le bloc mobile se déplacera à une vitesse supérieure, dans le cas d'un mouvement accéléré, ou inférieure, dans le cas d'un mouvement retardé, à cette vitesse donnée. L'accélération ou le retard du déplacement du bloc mobile par rapport au dispositif de poussée 14 permet de synchroniser le déplacement du bloc mobile avec celui du ou des tiges d'éjection 64 afin que le bloc mobile et les tiges d'éjection 64 atteignent la position d'éjection en même temps alors que les courses d'éjection sont différentes.

Sur la Fig. 11, l'angle α est sensiblement égal à 30° et l'angle β est nul. Dans ce cas, le bloc mobile se déplace à la même vitesse que le dispositif de poussée 14.

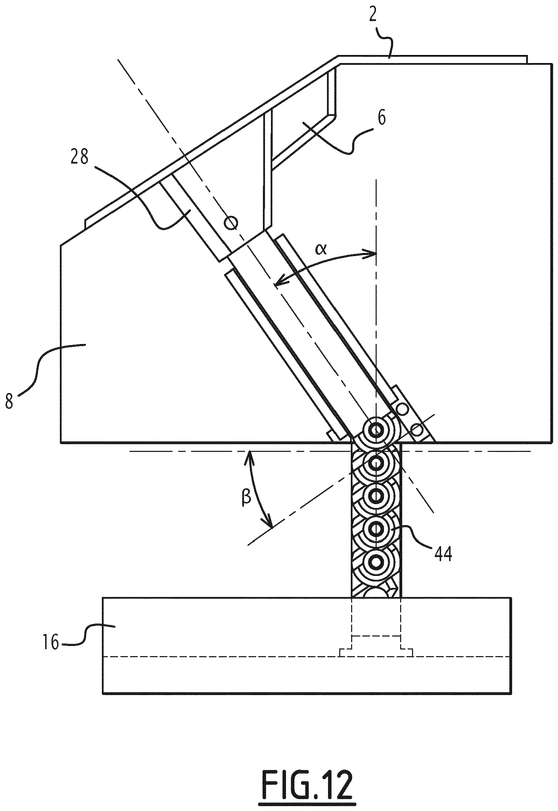

Sur la Fig. 12, l'angle α est sensiblement égal à 35° et l'angle β est sensiblement égal à -35°. Dans ce cas, le bloc mobile se déplace à une vitesse inférieure à la vitesse de déplacement du dispositif de poussée 14.

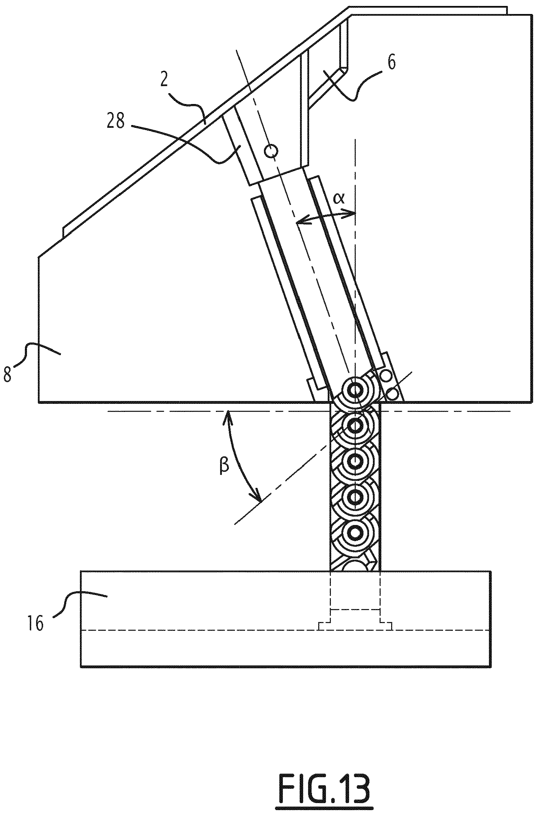

Sur la Fig. 13, l'angle α est sensiblement égal à 20° et l'angle β est sensiblement égal à -40°. Dans ce cas, le bloc mobile se déplace à une vitesse inférieure à la vitesse de déplacement du dispositif de poussée 14.

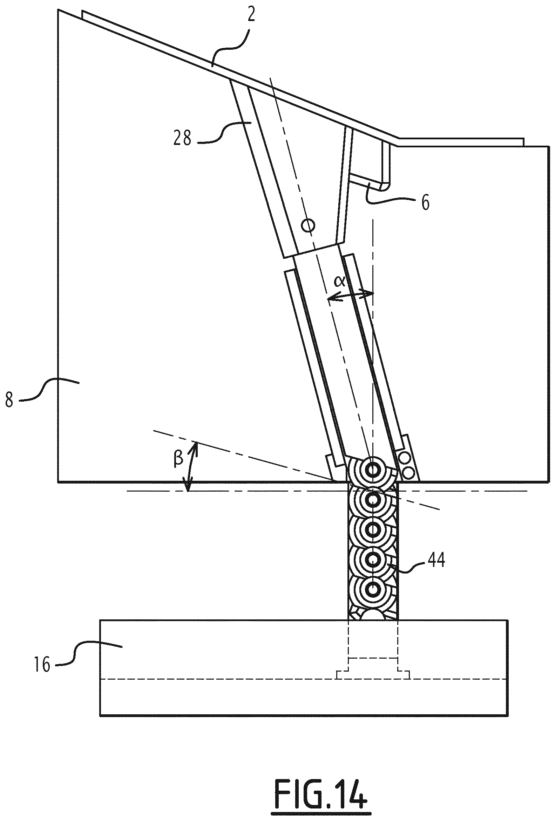

Sur la Fig. 14, l'angle α est sensiblement égal à 15° et l'angle β est sensiblement égal à 20°. Dans ce cas, le bloc mobile se déplace à une vitesse supérieure à la vitesse de déplacement du dispositif de poussée 14.

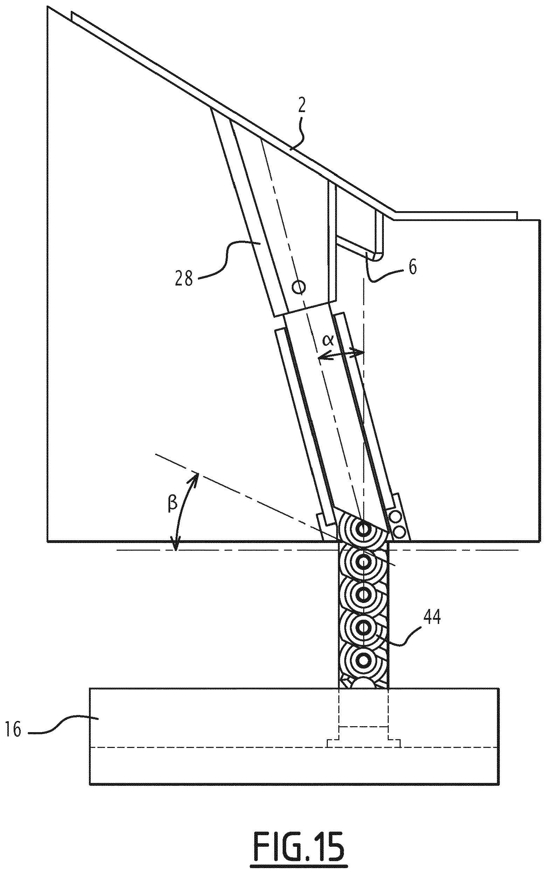

Sur la Fig. 15, l'angle α est sensiblement égal à 15° et l'angle β est sensiblement égal à 30°. Dans ce cas, le bloc mobile se déplace à une vitesse supérieure à la vitesse de déplacement du dispositif de poussée 14.

Ainsi, on comprend qu'en choisissant un angle β négatif, le déplacement du bloc mobile est retardé et en choisissant un angle β positif, le déplacement du bloc mobile est accéléré.

Lorsque la plaque d'éjection atteint sa position d'éjection, dans laquelle elle est par exemple en contact avec la paroi supérieure de l'espace 18 de la première partie 4, comme représenté sur la Fig. 4, l'article moulé 2 est complètement séparé de la surface de moulage 10 et le bloc mobile est complètement extrait de la zone en contre-dépouille 6. Ainsi, l'article moulé 2 peut être retiré du moule sans encombre et sans interférence avec l'une des parties du moule et du dispositif d'éjection.

Le dispositif d'éjection décrit ci-dessus permet donc l'éjection d'articles moulés de grandes dimensions et/ou de forme complexe sans affaiblir la première partie du moule. En outre, le dispositif de transfert peut être utilisé pour adapter le dispositif d'éjection à la forme de l'article moulé 2. La chaîne de maillons peut être facilement modifiée en ajoutant ou supprimant des maillons 44, qui sont tous identiques et interchangeables. En outre, l'angle α entre le premier axe A1 et le deuxième axe A2 peut être modifié en changeant simplement une pièce d'interface 66 interposée entre le premier tronçon 32 et le deuxième tronçon 38. Cette pièce d'interface 66 permet de plus ou moins incliner le deuxième tronçon 38 par rapport au premier tronçon 32.. Ainsi, des éléments communs du dispositif d'éjection, tels que les maillons 44, la tige d'actionnement 31, les premiers et deuxièmes profilés 34 et 40, la plaque d'éjection 16 et la ou les tiges d'éjection 64 peuvent être utilisés pour différents moules. Il suffit de changer uniquement le bloc mobile lorsque la forme de la surface de moulage secondaire 12 doit être modifiée et/ou la pièce d'interface 66 lorsque l'angle α doit être modifié.

Le dispositif d'éjection décrit ci-dessus pourrait être modifié de diverses façons tout en restant conforme à l'invention. Ainsi, à titre d'exemple, le élément d'éjection pourrait ne pas comprendre de surface de moulage secondaire et servir uniquement à la séparation de l'article moulé 2 de la surface de moulage 10, notamment lorsque la surface principale 4 de l'article moulé présente des zones s'étendant dans des directions différentes d'une direction sensiblement perpendiculaire à la direction d'ouverture. Les maillons 44 pourraient également être formés de simples pavés dont les surfaces externes forment les surfaces de glissement et de guidage Dans un tel mode de réalisation, les maillons 44 ne sont pas directement liés les uns aux autres et sont en simple contact glissant les uns par rapport aux autres.

En outre, il est entendu que le moule pourrait comprendre plusieurs deuxièmes éléments d'éjection 28 et plusieurs dispositifs de transfert 26 correspondant pour permettre le moulage et l'éjection de plusieurs zones en contre-dépouille 6 et/ou l'éjection de plusieurs zones de forme complexe de la surface principale 2. Dans ce cas, une seule plaque d'éjection 16 portant plusieurs maillons d'actionnement 48 peut être prévue pour actionner simultanément tous les deuxièmes éléments d'éjection 28.

## Revendications

1. Dispositif d'éjection pour moule de réalisation d'un article moulé (2) dans une cavité de moulage destiné à permettre l'éjection de l'article moulé (2) hors de ladite cavité de moulage, ledit dispositif comprenant :
- un dispositif de poussée (14) mobile en translation selon un premier axe (A1) entre une position rétractée et une position d'éjection,
- au moins un élément d'éjection (28) mobile en translation selon un deuxième axe (A2), différent du premier axe (A1), entre une position rétractée et une position d'éjection,
- au moins un dispositif de transfert (26) reliant le dispositif de poussée (14) et l'élément d'éjection (28), ledit dispositif de transfert (26) étant agencé pour déplacer l'élément d'éjection (28) selon le deuxième axe (A2) entre sa position rétractée et sa position d'éjection lorsque le dispositif de poussée (14) est déplacé selon le premier axe (A1) entre sa position rétractée et sa position d'éjection,
**caractérisé en ce que** le dispositif de transfert (26) comprend au moins deux maillons (44), mobiles en translation l'un par rapport à l'autre et par rapport au dispositif de poussée (14) et à l'élément d'éjection (28).

2. Dispositif d'éjection selon la revendication 1, dans lequel le dispositif de transfert (26) comprend un élément de guidage (30) recevant lesdits maillons (44), lesdits maillons (44) étant déplacés selon une course de déplacement dans ledit élément de guidage (30) par le dispositif de poussée (14) et déplaçant l'élément d'éjection (28), lesdits maillons (44) étant guidés dans ledit élément de guidage (30) sur toute la course de déplacement.

3. Dispositif d'éjection selon la revendication 2, dans lequel l'élément de guidage (30) comprend au moins deux parois opposées s'étendant chacune selon la course de déplacement.

4. Dispositif d'éjection selon la revendication 3, dans lequel les maillons (44) comprennent chacun deux surfaces de guidage (54) opposées, lesdites surfaces de guidage (54) étant respectivement en contact permanent avec une paroi opposée de l'élément de guidage (30) sur toute la course de déplacement de sorte que les maillons (44) sont guidés dans ledit élément de guidage (30) sur toute la course de déplacement.

5. Dispositif d'éjection selon l'une quelconque des revendications 1 à 4, dans lequel les maillons (44) sont identiques les uns aux autres.

6. Dispositif d'éjection selon l'une quelconque des revendications 1 à 5, dans lequel le deuxième axe (A2) forme un angle (α) non nul avec le premier axe (A1).

7. Dispositif d'éjection selon l'une quelconque des revendications 1 à 6, dans lequel chaque maillon (44) comprend une première surface de glissement (46) formant une surface de translation avec un premier maillon (44) adjacent et une deuxième surface de glissement (46) formant une surface de translation avec un deuxième maillon adjacent (44).

8. Dispositif d'éjection selon les revendications 6 et 7, dans lequel chaque surface de glissement (46) forme un angle (β) par rapport à une direction perpendiculaire au premier axe (A1), ledit angle (β) étant négatif pour retarder le déplacement de l'élément d'éjection (28) par rapport au dispositif de poussée (14) ou positif pour accélérer le déplacement de l'élément d'éjection (28) par rapport au dispositif de poussée (14) ou nul pour déplacer l'élément d'éjection (28) et le dispositif de poussée (14) à la même vitesse.

9. Dispositif d'éjection selon l'une quelconque des revendications 1 à 8, dans lequel l'élément d'éjection (28) comprend une surface de moulage secondaire (12) agencée pour former une partie de la cavité de moulage et pour mouler une partie de l'article moulé (2), le déplacement de l'élément d'éjection (28) dans la position d'éjection entraînant la séparation de la surface de moulage secondaire (12) de la partie de l'article moulé (2) moulée par ladite surface de moulage secondaire (10).

10. Dispositif d'éjection selon l'une quelconque des revendications 1 à 9, dans lequel le dispositif de poussée (14) comprend une plaque d'éjection (16) mobile en translation selon une direction parallèle au premier axe (A1), ledit dispositif d'éjection comprenant en outre une tige d'éjection (64) solidaire de la plaque d'éjection (16) et agencée pour déplacer l'article moulé (2) selon ladite direction parallèle au premier axe (A1).

## Patentansprüche

1. Auswurfvorrichtung für eine Form zur Schaffung eines geformten Gegenstandes (2) in einem Formhohlraum, dazu bestimmt, das Auswerfen des geformten Gegenstandes (2) aus dem besagten Formhohlraum zu ermöglichen, wobei die besagte Vorrichtung umfasst:
- eine Schubvorrichtung (14), die translatorisch verschiebbar entlang einer ersten Achse (A1) zwischen einer zurückgezogenen Stellung und einer Auswurfstellung ist,
- mindestens ein entlang einer zweiten Achse (A2), die von der ersten Achse (A1) verschieden ist, translatorisch verschiebbares Auswurfelement (28) zwischen einer zurückgezogenen Stellung und einer Auswurfstellung,
- mindestens eine Transfervorrichtung (26), die die Schubvorrichtung (14) und das Auswurfelement (28) verbindet, wobei die besagte Transfervorrichtung (26) angeordnet ist, um das Auswurfelement (28) entlang der zweiten Achse (A2) zwischen seiner zurückgezogenen Stellung und seiner Auswurfstellung zu verschieben, wenn die Schubvorrichtung (14) entlang der ersten Achse (A1) zwischen ihrer zurückgezogenen Stellung und ihrer Auswurfstellung verschoben wird,
**dadurch gekennzeichnet, dass** die Transfervorrichtung (26) mindestens zwei Glieder (44) umfasst, die in Bezug aufeinander und in Bezug auf die Schubvorrichtung (14) und das Auswurfelement (28) translatorisch verschiebbar sind.

2. Auswurfvorrichtung nach Anspruch 1, in welcher die Transfervorrichtung (26) ein Führungselement (30) umfasst, das die besagten Glieder (44) aufnimmt, wobei die besagten Glieder (44) entlang einem Verschiebeweg in dem besagten Führungselement (30) durch die Schubvorrichtung (14) verschoben werden und das Auswurfelement (28) verschieben, wobei die besagten Glieder (44) in dem besagten Führungselement (30) über den gesamten Verschiebeweg geführt werden.

3. Auswurfvorrichtung nach Anspruch 2, in welcher das Führungselement (30) mindestens zwei gegenüberliegende Wände umfasst, die sich jede entlang des Verschiebewegs erstrecken.

4. Auswurfvorrichtung nach Anspruch 3, in welcher die Glieder (44) jedes zwei gegenüberliegende Führungsflächen (54) umfassen, wobei die besagten Führungsflächen (54) jeweils in ständiger Berührung mit einer gegenüberliegenden Wand des Führungselements (30) über den gesamten Verschiebeweg sind, dergestalt, dass die Glieder (44) in dem besagten Führungselement (30) über den gesamten Verschiebeweg geführt werden.

5. Auswurfvorrichtung nach einem der Ansprüche 1 bis 4, in welcher die Glieder (44) untereinander identisch sind.

6. Auswurfvorrichtung nach einem der Ansprüche 1 bis 5, in welcher die zweite Achse (A2) einen Winkel (α) ungleich Null mit der ersten Achse (A1) bildet.

7. Auswurfvorrichtung nach einem der Ansprüche 1 bis 6, in welcher jedes Glied (44) eine erste Gleitfläche (46) umfasst, die eine Translationsfläche mit einem ersten angrenzenden Glied (44) bildet, und eine zweite Gleitfläche (46), die eine Translationsfläche mit einem zweiten angrenzenden Glied (44) bildet.

8. Auswurfvorrichtung nach den Ansprüchen 6 und 7, in welcher jede Gleitfläche (46) einen Winkel (β) in Bezug auf eine senkrechte Richtung zur ersten Achse (A1) bildet, wobei der besagte Winkel (β) negativ ist, um die Verschiebung des Auswurfelements (28) in Bezug auf die Schubvorrichtung (14) zu verzögern, oder positiv, um die Verschiebung des Auswurfelements (28) in Bezug auf die Schubvorrichtung (14) zu beschleunigen, oder null, um das Auswurfelement (28) und die Schubvorrichtung (14) mit derselben Geschwindigkeit zu verschieben.

9. Auswurfvorrichtung nach einem der Ansprüche 1 bis 8, in welchem das Auswurfelement (28) eine sekundäre Formfläche (12) umfasst, die so angeordnet ist, um einen Teil des Formhohlraums zu bilden und um einen Teil des geformten Gegenstandes (2) zu formen, wobei die Verschiebung des Auswurfelements (28) in die Auswurfstellung die Trennung der sekundären Formfläche (12) von dem Teil des geformten Gegenstandes (2), der durch die besagte sekundäre Formfläche geformt wurde (10), nach sich zieht.

10. Auswurfvorrichtung nach einem der Ansprüche 1 bis 9, in welcher die Schubvorrichtung (14) eine Auswerferplatte (16) umfasst, die entlang einer zur ersten Achse (A1) parallelen Richtung translatorisch verschiebbar ist, wobei die besagte Auswurfvorrichtung des Weiteren eine Auswerferstange (64) umfasst, die mit der Auswerferplatte (16) fest verbunden ist und so angeordnet ist, um den geformten Gegenstand (2) entlang der besagten zur ersten Achse (A1) parallelen Richtung zu verschieben.

## Claims

1. An ejection device for a mold used to produce a molded part (2) in a molding cavity intended to allow the ejection of the molded part outside said molding cavity, said device comprising:
- a pushing device (14) translatable along a first axis (A1) between a retracted position and an ejection position,
- at least one ejection element (28) translatable along a second axis (A2), different from the first axis (A1), between a retracted position and an ejection position,
- at least one transfer device (26) connecting the pushing device (14) and the ejection element (28), said transfer device (26) being arranged to move the ejection element (28) along the second axis (A2) between its retracted position and its ejection position when the pushing device (14) is moved along the first axis (A1) between its retracted position and its ejection position,
**characterized in that** the transfer device (26) comprises at least two links (44), translatable relative to one another and relative to the pushing device (14) and the ejection element (28).

2. The ejection device according to claim 1, wherein the transfer device (26) comprises a guide element (30) receiving said links (44), said links (44) being moved along a movement path in said guide element (30) by the pushing device (14) and moving the ejection element (28), said links (44) being guided in said guide element (30) over the entire movement path.

3. The ejection device according to claim 2, wherein the guide element (30) comprises at least two opposite walls each extending over the movement path.

4. The ejection device according to claim 3, wherein the links (44) comprise two opposite guide surfaces (54), said guide surfaces (54) respectively being in permanent contact with an opposite wall of the guide element (30) over the entire movement path such that the links (44) are guided in said guide element (30) over the entire movement path.

5. The ejection device according to claim 1, wherein the links (44) are identical to one another.

6. The ejection device according to claim 1, wherein the second axis (A2) forms a non-zero angle (α) with the first axis (A1).

7. The ejection device according to claim 1, wherein each link (44) comprises a first sliding surface (46) forming a translation surface with a first adjacent link (44) and a second sliding surface (46) forming a translation surface with a second adjacent link (44).

8. The ejection device according to claims 6 and 7, wherein each sliding surface (46) forms an angle (β) relative to a direction perpendicular to the first axis (A1), said angle (β) being negative to delay the movement of the ejection element (28) relative to the pushing device (14) or positive to accelerate the movement of the ejection element (28) relative to the pushing device (14) or zero to move the ejection element (28) and the pushing device (14) at the same speed.

9. The ejection device according to claim 1, wherein the ejection element (28) comprises a secondary molding surface (12) arranged to form part of the molding cavity and to mold a portion of the molded part (2), the movement of the ejection element (28) in the ejection position causing the separation of the secondary molding surface (12) from the portion of the molded part (2) molded by said secondary molding surface (12).

10. The ejection device according to claim 1, wherein the pushing device (14) comprises an ejection plate (16) translatable along a direction parallel to the first axis (A1), said ejection device further comprising an ejection rod (64) secured to the ejection plate (16) and arranged to move the molded part (2) along said direction parallel to the first axis (A1).
